# FASCICULE DE BREVET EUROPEEN

(11) **EP 1 923 258 B1**
(45) Date de publication et mention de la délivrance du brevet: **28.04.2010**
(21) Numéro de dépôt: 07291358.5
(22) Date de dépôt: 13.11.2007
(51) Int. Cl.: B60N 2/48

(54) **Dispositif de blocage en coulissement d'une tige d'un appui tête comprenant un tiroir renforcé**
Verschiebbare Blockiervorrichtung einer Stange einer Kopfstütze mit verstärktem Schieber
Device for locking the sliding of a rod of a head rest comprising a strengthened slide valve

(30) Priorité: 15.11.2006 FR 0609996
(43) Date de publication de la demande: 21.05.2008
(73) Titulaire: Centre d'etude et de recherche pour l'automobile (CERA), 51100 Reims (FR)
(72) Inventeur: DeHondt, Thierry, 51430 Tinqueux (FR); Dauchez, Fernand, 2400 Bezu Saint Germain (FR)
(74) Mandataire: Sayettat, Julien Christian

(56) Documents cités:
- FR-A- 2 888 794
- FR-A1- 2 671 587
- US-A- 5 056 867
- US-B1- 6 454 356

## Description

L'invention concerne un dispositif de blocage en coulissement d'une tige crantée d'association d'un appui-tête à un dossier de siège de véhicule automobile et un siège comprenant un tel dispositif.

Il est connu de réaliser un dispositif de blocage en coulissement d'une tige métallique crantée d'association d'un appui-tête à un dossier de siège de véhicule automobile, ledit dispositif comprenant un manchon de réception de ladite tige en coulissement et, solidaire dudit manchon, un tiroir monté en translation radiale, ledit tiroir comprenant un bord de blocage destiné à coopérer avec au moins un cran de ladite tige de sorte à la bloquer en coulissement, ceci en vue d'un réglage en hauteur de l'appui-tête ou d'un blocage de sécurité, pour éviter notamment une projection et/ou un affaissement de l'appui-tête en cas de choc. Le bord comprend une zone latérale, sensiblement verticale, et au moins une zone sensiblement horizontale de réception des efforts de blocage de ladite tige, ledit tiroir étant contraint en translation vers ledit manchon par un moyen de rappel élastique, par exemple sous forme de ressort, de sorte à permettre la coopération entre ledit bord et ledit cran lorsqu'ils sont en vis à vis.

Le manchon et le tiroir sont usuellement réalisés en matière plastique moulée par injection.

Pour des raisons de résistance aux efforts exercés selon l'axe de coulissement, il est généralement nécessaire de recouvrir le bord d'une pièce de renfort, notamment à base de métal ou de réaliser le bord en métal, par exemple sous la forme d'une tige métallique rapportée.

Le document US-A-6454356 montre un dispositif selon le préambule de la revendication 1, avec un bord recouvert d'une pièce de renfort.

De telles réalisations créent un contact métal sur métal entre le tiroir et la tige, ceci par l'intermédiaire du bord de blocage ou de la pièce de renfort.

II en résulte, au cours de l'utilisation du dispositif lors des manoeuvres de coulissement, un risque de dégradation de l'aspect de la tige par abrasion, voire de bruit parasite, et ceci d'autant plus que le moyen de rappel est puissant.

L'invention a pour but de pallier cet inconvénient.

A cet effet, et selon un premier aspect, l'invention propose un dispositif de blocage en coulissement d'une tige métallique crantée d'association d'un appui-tête à un dossier de siège de véhicule automobile, ledit dispositif comprenant un manchon de réception de ladite tige en coulissement et, solidaire dudit manchon, un tiroir monté mobile en translation radiale, ledit tiroir comprenant un bord de blocage destiné à coopérer avec au moins un cran de ladite tige de sorte à la bloquer en coulissement, ledit bord comprenant une zone latérale, sensiblement verticale, et au moins une zone sensiblement horizontale de réception des efforts de blocage de ladite tige, ledit tiroir étant contraint en translation vers ledit manchon par un moyen de rappel élastique de sorte à permettre la coopération entre ledit bord et ledit cran lorsqu'ils sont en vis à vis, ledit bord étant recouvert, au moins sur ladite zone horizontale, d'une pièce de renfort associée audit tiroir, ladite pièce étant agencée pour laisser découverte au moins une partie de ladite zone latérale, de sorte que ladite tige une fois montée dans ledit dispositif soit en appui contre ladite partie découverte.

Dans cette description, les termes de positionnement dans l'espace (horizontal, vertical,...) sont pris en référence au dispositif disposé dans le véhicule.

Ainsi, le contact entre la tige métallique et le tiroir, généralement en matière plastique, et en tout état de cause non métallique, ne met pas en jeu un contact métal/métal, ce qui supprime l'abrasion précédemment évoquée.

Selon un deuxième aspect, l'invention propose un siège comprenant un tel dispositif.

D'autres particularités et avantages de l'invention apparaîtront dans la description qui suit, faite en référence aux figures jointes dans lesquelles :
- la figure 1 est une vue en perspective éclatée d'un dispositif selon un premier mode de réalisation,
- la figure 2 est une vue en coupe partielle du dispositif de la figure 1, une tige crantée étant disposée dedans en coulissement, le bord de blocage coopérant avec un cran de la tige,
- la figure 3 est une vue en coupe partielle d'un dispositif selon un deuxième mode de réalisation, une tige crantée étant disposée dedans en coulissement, le bord de blocage coopérant avec un cran de la tige,
- la figure 4 est une vue en perspective éclatée d'un tiroir pour un dispositif selon un troisième mode de réalisation, et d'une pièce de renfort destinée à lui être associée.

En référence aux figures, on décrit à présent un dispositif 1 de blocage en coulissement d'une tige 2 métallique crantée d'association d'un appui-tête à un dossier de siège de véhicule automobile, non représentés, ledit dispositif comprenant un manchon 3 de réception de ladite tige en coulissement et, solidaire dudit manchon, un tiroir 4 monté mobile en translation radiale, ledit tiroir comprenant un bord 5 de blocage destiné à coopérer avec au moins un cran 6 de ladite tige de sorte à la bloquer en coulissement, ledit bord comprenant une zone latérale 7, sensiblement verticale, et au moins une zone sensiblement horizontale 8 de réception des efforts de blocage de ladite tige, ledit tiroir étant contraint en translation vers ledit manchon par un moyen de rappel 9 élastique, notamment sous forme de ressort, de sorte à permettre la coopération entre ledit bord et ledit cran lorsqu'ils sont en vis à vis, ledit bord étant recouvert, au moins sur ladite zone horizontale, d'une pièce de renfort 11 associée audit tiroir, ladite pièce étant agencée pour laisser découverte au moins une partie 12 de ladite zone latérale, de sorte que ladite tige une fois montée dans ledit dispositif soit en appui contre ladite partie découverte.

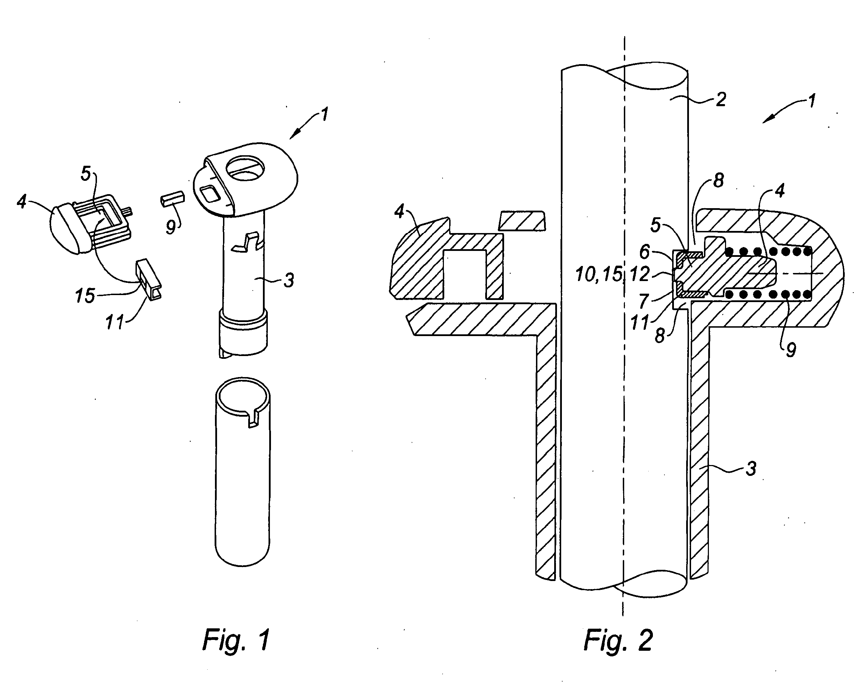

Selon la réalisation des figures 1 et 2, la pièce de renfort 11 est sous forme d'un profilé en U, ledit profilé étant disposé contre le bord 5 de blocage, en regard de la zone latérale 7 et de deux zones horizontales 8 situées de part et d'autre de ladite zone latérale, la partie découverte 12 étant sous forme d'excroissance 10 issue de ladite zone latérale, un orifice 15 étant prévu entre les branches du U de sorte à permettre le passage de ladite excroissance. Ainsi, le bord 5 de blocage est en contact avec la tige 2 en partie centrale uniquement, par un contact entre un cercle et une droite en un point, de sorte à limiter l'éraillement de ladite tige.

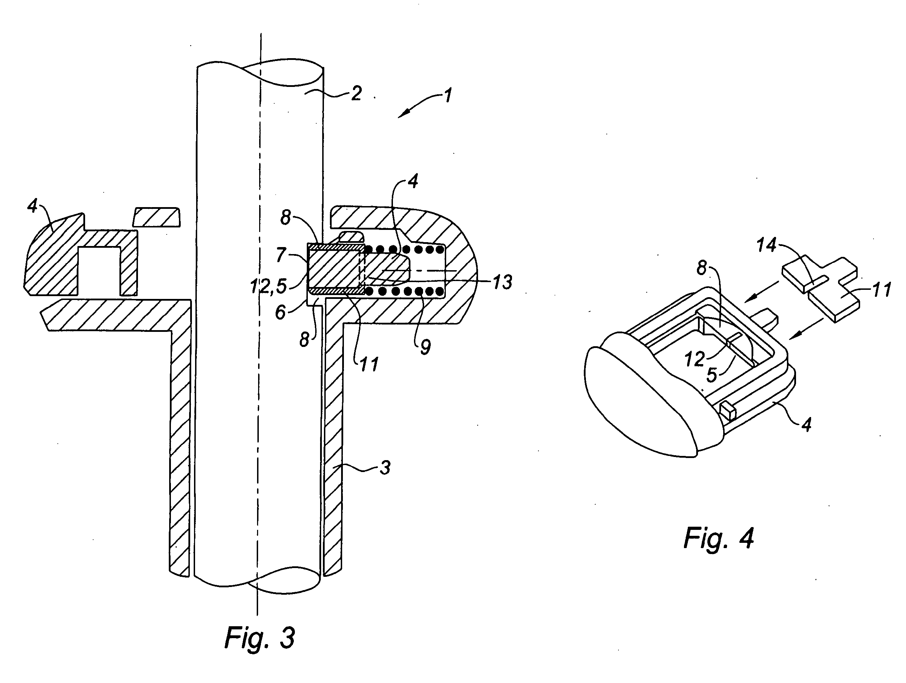

Selon la réalisation de la figure 3, la pièce de renfort 11 est sous forme d'un profilé en U, ledit profilé étant disposé en regard de deux zones horizontales 8 situées de part et d'autre de la zone latérale 7, la partie centrale du U étant située à l'opposé 13 du bord de blocage de sorte à libérer ladite zone latérale pour qu'elle forme partie découverte 12.

Selon la réalisation de la figure 4, la pièce de renfort 11 est sous forme d'une lame recouvrant une zone horizontale 8, ladite lame étant pourvue d'une encoche 14 découvrant une partie découverte 12 dans la zone latérale 7.

Selon les réalisations représentées, la pièce de renfort est associée au tiroir par emboîtement.

En variante, elle peut être associée au tiroir par surmoulage.

Un siège de véhicule automobile comprenant un tel dispositif peut comprendre un appui-tête - respectivement un dossier - pourvu d'au moins une tige crantée, et un dossier - respectivement un appui-tête associé audit dispositif.

## Revendications

1. Dispositif (1) de blocage en coulissement d'une tige (2) métallique crantée d'association d'un appui-tête à un dossier de siège de véhicule automobile, ledit dispositif comprenant un manchon (3) de réception de ladite tige en coulissement et, solidaire dudit manchon, un tiroir (4) monté mobile en translation radiale, ledit tiroir comprenant un bord (5) de blocage destiné à coopérer avec au moins un cran (6) de ladite tige de sorte à la bloquer en coulissement, ledit bord comprenant une zone latérale (7), sensiblement verticale, et au moins une zone sensiblement horizontale (8) de réception des efforts de blocage de ladite tige, ledit tiroir étant contraint en translation vers ledit manchon par un moyen de rappel (9) élastique de sorte à permettre la coopération entre ledit bord et ledit cran lorsqu'ils sont en vis à vis, ledit bord étant recouvert, au moins sur ladite zone horizontale, d'une pièce de renfort (11) associée audit tiroir, ledit dispositif étant **caractérisé en ce que** ladite pièce étant agencée pour laisser découverte au moins une partie (12) de ladite zone latérale, de sorte que ladite tige une fois montée dans ledit dispositif soit en appui contre ladite partie découverte, et tel que le contact entre la tige et le tiroir ne met pas en jeu un contact métal/métal lors des manoeuvres de coulissement.

2. Dispositif selon la revendication 1, la pièce de renfort (11) étant sous forme d'un profilé en U, ledit profilé étant disposé contre le bord (5) de blocage, en regard de la zone latérale (7) et de deux zones horizontales (8) situées de part et d'autre de ladite zone latérale, la partie découverte (12) étant sous forme d'excroissance (10) issue de ladite zone latérale, un orifice (15) étant prévu entre les branches du U de sorte à permettre le passage de ladite excroissance.

3. Dispositif selon la revendication 1, la pièce de renfort (11) étant sous forme d'un profilé en U, ledit profilé étant disposé en regard de deux zones horizontales (8) situées de part et d'autre de la zone latérale (7), la partie centrale du U étant située à l'opposé (13) du bord de blocage de sorte à libérer ladite zone latérale pour qu'elle forme partie découverte (12).

4. Dispositif selon la revendication 1, la pièce de renfort (12) étant sous forme d'une lame recouvrant une zone horizontale (8), ladite lame étant pourvue d'une encoche (14) découvrant une partie découverte (12) dans la zone latérale (7).

5. Dispositif selon l'une quelconque des revendications 1 à 4, la pièce de renfort (11) étant associée au tiroir (4) par emboîtement.

6. Dispositif selon l'une quelconque des revendications 1 à 4, la pièce de renfort (11) étant associée au tiroir (4) par surmoulage.

7. Siège de véhicule automobile comprenant un appui-tête, pourvu d'au moins une tige (2) crantée, et d'un dossier associé à un dispositif selon l'une quelconque des revendications 1 à 6.

8. Siège de véhicule automobile comprenant un dossier, pourvu d'au moins une tige (2) crantée, et un appui-tête associé à un dispositif selon l'une quelconque des revendications 1 à 6.

## Claims

1. Device (1) for slide-blocking a notched metal rod (2) for combining a headrest with the back of a vehicle seat, said device including a sleeve (3) for slidingly receiving said rod and a slider (4) connected to said sleeve and movably mounted so as to be capable of radial translation, the slider including a blocking edge (5) interacting with at least one notch (6) of said rod so as to block the sliding thereof, the edge including a substantially vertical side area (7) and at least one substantially horizontal area (8) for receiving the blocking forces of said rod, said slider being urged in translation towards said sleeve by an elastic return means (9) in order to enable the engagement of said edge with said notch when they are opposite each other, said edge being covered at least on said horizontal area by a reinforcement part (11) associated with said slider, said device being **characterised in that** said part being arranged so as to expose at least a portion (12) of said side area so that said rod once mounted in said device bears against said exposed portion, and such that the contact between the rode and the slider does not call into play a metal/metal contact during the sliding manoeuvres.

2. Device according to claim 1, the reinforcement part (11) having the form of a U-shaped section, said section being arranged against the blocking edge (5), across from the side area (7) and two horizontal areas (8) located on either side of said side area, the exposed portion (12) having the form of a protuberance (10) coming from said side area, an orifice (15) being provided between the branches of the U in such a way as to allow for the passage of said protuberance.

3. Device according to claim 1, the reinforcement part (11) having the form of a U-shaped section, said section being arranged across from two horizontal areas (8) located on either side of said side area (7), the central portion of the U being located opposite (13) the blocking edge in such a way as to release said side area so that it forms an exposed portion (12).

4. Device according to claim 1, the reinforcement part (12) having the form of a blade covering a horizontal area (8), said blade being provided with a slot (14) exposing an exposed portion (12) in the side area (7).

5. Device according to any of claims 1 to 4, the reinforcement part (11) being associated with the slider (4) by nesting.

6. Device according to any of claims 1 to 4, the reinforcement part (11) being associated with the slider (4) by overmoulding.

7. Automobile seat comprising a headrest, provided with at least one notched rod (2), and a seat back associated with a device according to any of claims 1 to 6.

8. Automobile seat comprising a dossier, provided with at least one notched rod (2), and a headrest associated with a device according to any of claims 1 to 6.

## Patentansprüche

1. Vorrichtung (1) zum Blockieren der Gleitbewegung einer metallischen Rasterstange (2) zum Verbinden einer Kopfstütze mit einer Sitzrückenlehne eines Kraftfahrzeugs, wobei die Vorrichtung eine Muffe (3) zum Aufnehmen der Stange in der Gleitbewegung und mit der Muffe fest verbunden ein Schubfach (4), das in Radialverschiebung bewegbar angebracht ist, umfasst, wobei das Schubfach einen Blockierungsrand (5) umfasst, der dazu gedacht ist, um mit mindestens einer Rasterung (6) der Stange zusammenzuwirken, um diese in der Gleitbewegung zu blockieren, wobei der Rand einen im Wesentlichen senkrechten seitlichen Bereich (7) und mindestens einen im Wesentlichen waagerechten Bereich (8) zum Aufnehmen der Blockierungskräfte der Stange umfasst, wobei das Schubfach in Verschiebung auf die Muffe zu von einem elastischen Rückholmittel (9) beansprucht wird, um das Zusammenwirken zwischen dem Rand und der Rasterung zu ermöglichen, wenn sie sich gegenüberstehen, wobei der Rand mindestens in dem waagerechten Bereich mit einem Verstärkungsstück (11) bedeckt ist, das mit dem Schubfach verbunden ist, wobei die Vorrichtung **dadurch gekennzeichnet ist, dass** das Stück angeordnet ist, um mindestens einen Teil (12) des seitlichen Bereichs frei zu lassen, so dass die Stange, wenn sie in der Vorrichtung angebracht ist, sich an dem freien Teil abstützt, und dass der Kontakt zwischen der Stange und dem Schubfach bei den Gleitmanövern keinen Kontakt von Metall auf Metall einbringt.

2. Vorrichtung nach Anspruch 1, wobei das Verstärkungsstück (11) in Form eines U-Profils vorliegt, wobei das Profil an dem Blockierungsrand (5) angeordnet ist, gegenüber dem seitlichen Bereich (7) und von zwei waagerechten Bereichen (8), die sich auf beiden Seiten des seitlichen Bereichs befinden, wobei der freie Teil (12) in Form einer Ausstülpung (10) vorliegt, die aus dem seitlichen Bereich stammt, wobei eine Öffnung (15) zwischen den Schenkeln des U bereitgestellt wird, um den Durchgang der Ausstülpung zu ermöglichen.

3. Vorrichtung nach Anspruch 1, wobei das Verstärkungsstück (11) in Form eines U-Profils vorliegt, wobei das U-Profil gegenüber von zwei waagerechten Bereichen (8) angeordnet ist, die sich auf beiden Seiten des seitlichen Bereichs (7) befinden, wobei der mittlere Teil des U sich gegenüber (13) dem Blockierungsrand befindet, um den seitlichen Bereich freizugeben, damit er dcn freien Teil (12) bildet.

4. Vorrichtung nach Anspruch 1, wobei das Verstärkungestück (12) in Form eines Plättchens vorliegt, das einen waagerechten Bereich (8) abdeckt, wobei das Plättchen mit einer Einkerbung (14) versehen ist, die einen freien Teil (12) in dem seitlichen Bereich (7) freilegt.

5. Vorrichtung nach einem der Ansprüche 1 bis 4, wobei das Verstärkungsstück (11) mit dem Schubfach (4) durch Einstecken verbunden wird.

6. Vorrichtung nach einem der Ansprüche 1 bis 4, wobei das Verstärkungsstück (11) mit dem Schubfach (4) durch Umspritzung verbunden wird.

7. Kraftfahrzeugsitz, umfassend eine Kopfstütze, die mindestens mit einer Rasterstange (2) und mit einer Rückenlehne, die mit einer Vorrichtung nach einem der Ansprüche 1 bis 6 verbunden ist, versehen ist.

8. Kraftfahrzeugsitz, umfassend eine Rückenlehne, die mit mindestens einer Rasterstange (2) und einer Kopfstütze, die mit einer Vorrichtung nach einem der Ansprüche 1 bis 6 verbunden ist, versehen ist.
